# EUROPEAN PATENT APPLICATION

(11) **EP 3 315 469 A1**
(43) Date of publication of application: **02.05.2018**
(21) Application number: 16745170.7
(22) Date of filing: 24.06.2016
(51) Int. Cl.: C03C 8/20, C04B 41/00, C04B 41/50, C04B 41/86, C04B 111/00, C04B 111/80, C04B 103/54

(54) **CERAMIC LINING SHEET FOR EXTERNAL USE**

(30) Priority: 24.06.2015 PT 2015108574
(71) Applicant: Revigrés - Indústria De Revestimentos De Grés, LDA, 3754-001 Barrô (Águeda) (PT); CENTITVC - Centro de Nanotecnologia e Materiais Tecnicos, Funcionais e Inteligentes, 4760-034 Vila Nova de Famalicão (PT)
(72) Inventor: DA SILVA SOUSA, Juliana Patrícia, 4515-114 Foz do Sousa (Gondomar) (PT); DA SILVA SAMPAIO E PORTELA, Ana Rute, 4785-588 Trofa (PT); DA FONSECA E BRANQUINHO DE PAIS MONTEIRO, Joana, 3520-058 Nelas (PT); SANTOS MARINHO SILVA, Carla Joana, 4715-343 Braga (PT); GUEDES SÃO MARCOS, Pedro Miguel, 3800-043 Taboeira (PT)
(74) Representative: Patentree, Lda.
(86) International application number: PCT/IB2016/053784
(87) International publication number: WO 2016/207854

(57) **Abstract**

Coating plate in ceramic material for outdoor application, obtaining method and uses thereof. The ceramic coating plate for outdoor application comprises a vitreous layer wherein the vitreous layer comprises 3-30 % (m/m) of an infrared reflective pigment, wherein the infrared reflective pigment comprises titanium dioxide - TiO₂.

Said plate provides the user with thermal comfort in contact between the plantar surface of the feet and the ceramic material and may also be used in the coating of façades, or upper coverings.

TiO₂ concentration may be 5-25% (m/m), 8-20 % (m/m), or 9-11 % (m/m). TiO₂ particles have size between 0.1-2 µm, more preferably 0.25-2 µm. The infrared reflective pigment may further comprise metallic oxides Al₂O₃, SiO₂, MnO, SbO, Fe₂O₃, or mixtures thereof.

Said plate may be a tile, a ceramic, a mosaic, a paving block or a slab, among others.

## Description

### Technical domain

The present disclosure refers to a ceramic coating plate for outdoor application, obtaining method and uses thereof, particularly in the construction field. Said plate provides the user thermal comfort in contact between the plantar surface of the feet and the ceramic material and may also be used in the coating of façades, or upper coverings.

### Background

Ceramic coatings are, nowadays, one of the most versatile and durable materials in the market used in pavements, either due to their technical properties, or to their aesthetical versatility. Among the technical advantages of ceramic coatings over, for example, wood or cork, is the scratch and abrasion resistance, water resistance, chemical resistance, high durability, among others. Therefore, the high technical performance of ceramic coatings, associated with a profusion of decorations and formats allowing imitations of several other types of coating products, such as wood products, keeps ceramic coatings, in the short and medium term, among those elected for use in the most diverse residential areas.

However, among technical characteristics, thermal comfort is one of those still poorly explored but having a high impact in pavement application, mainly in residential zones. The relevance of thermal comfort may be observed through thermal assessment of the environment, in situations where people are barefoot or with some part of the body in contact with a surface, especially when exposed to extreme environmental thermal variations, adding to the intrinsic characteristics of the material, and which may give rise to a comfort or discomfort condition depending on the situation.

As previously mentioned, thermal comfort is still poorly explored in ceramic materials, this being the reason why the use of this type of coatings is still limited in certain residential areas. Particularly, in places where people walk barefoot, there may be localized discomfort due to direct contact of the plantar surface of the feet with the floor. This discomfort is intrinsically related to the material's thermal inertia, which defines the interface temperature when two solids are placed in contact: the lower the thermal inertia, the more comfortable the contact becomes. Generally, the thermal inertia depends on the contact resistance, highly dependent on the surface roughness, and is directly correlated with the thermal conductivity and density of the material.

When ceramic coatings are applied outdoors, such as balconies or swimming pools surrounding areas, the localized discomfort sensation is due to high temperatures reached by the surface of this type of materials in hot days, in virtue of heating by radiation. As it is common knowledge, solar radiation encompasses three regions, namely the ultraviolet (UV) region, the visible (VIS) region and the infrared (IR) region, the latter being responsible for the heating phenomenon of the atmosphere and materials. Therefore, materials with high reflectivity in the infrared region tend to reach lower temperatures, comparatively to materials of higher absorptivity. Usually, materials with white tonalities or pastel colours are preferably selected for this purpose, due to the high reflectivity values associated to this type of tonalities. There are also several published works aiming at increasing the reflectivity of materials used in construction through the application of coatings containing IR reflective inorganic additives, namely metallic oxide pigments and dispersed silica nanoparticles. As previously mentioned, ceramic coatings are known not only for their technical properties, but mainly also for their aesthetical versatility. Thus, in order to address the need felt in the construction field towards maintaining a wide range of styles and colours, IR reflective pigments have been applied, which reflect in a specific range, in this case the infrared, and which maintain their colour in the visible region.

As far as the application thereof in the construction sector is concerned, reflective pigments are commonly used in the preparation of paint formulations, especially for application in roofs and walls, due not only to their solar reflection ability, but also for their excellent weather resistance. The document EP 2525011 A1 describes a composition of an architectural paint with IR radiation reflective properties, to promote temperature reduction in roofs and walls exposed to solar radiation. According to the inventors, carbon black is widely used in paint industry for obtaining of dark colours, however, due to its solar spectrum absorption property along the visible and infrared regions, it causes the increase of surface temperature. In view of this observation, the invention focuses in the composition of paints with pigment additives alternative to carbon black. With these alternative pigments, which present different tonalities and have infrared reflection properties, the authors claim obtaining a wide range of colours, while maintaining IR reflection properties.

Another solution to promote reflection in the infrared region, without compromising the colour, focuses in the use of multilayer systems, where layers with IR reflection properties are combined with layers with absorption in the visible region but transparent to IR radiation. The document US 8822025 B2, applies this solution to obtain a coating system that may display several colours, namely dark colours, and that undergoes a reduced temperature increase when exposed to sunlight. An identical solution in described in the document US 8679617 B2, referring to coating systems with solar reflection, wherein reflective pigments used consist of aluminium flakes. The document US 7241500 B2 should also be cited, which refers to asphalt shingles with improved solar heat reflectance for application in roofs. According to the invention, this effect is achieved by applying a coating containing functional pigments with IR reflection properties. A second coating is applied to provide colour to the ceramic materials. A variation of this solution is found in the document WO/2014/035778 A1, which describes a construction article constituted by a film with infrared radiation reflection, a film with ultraviolet radiation reflection (UV) and an adhesive layer between these films. At least one of the layers described may include a dye with transmissive properties in the infrared region. This material may further include dyes with absorption in the visible region.

Another system is presented in the document US 8632631 B2, which describes cementitious systems with high solar reflectance index (SRI). The cementitious mixtures described in the invention include one or more IR reflective pigments and other conventional components needed for the production of the final material. The reflective pigments used may present different tonalities, from light colours to dark colours, therefore the colour obtained in the final material is determined by the reflective pigment used in its production.

In the document US 7846548 B2, the article described, which has IR reflection properties, may be used in several construction elements, namely in decks. According to the inventors, for this element in particular, the invention has special interest because of the excessive temperature felt on the surface of these materials on a summer day. According to the invention, the article described is based on the bilayer concept, similarly to inventions described above, where the first layer has reflective properties to IR radiation and the second is substantially transparent to that radiation. The layer with reflective properties includes a reflective pigment (TiO₂) and a polymer based on poly(vinyl chloride) (PVC), poly(propylene) (PP) or poly(ethylene) (PE), or mixture thereof. In this way, the article described in this document is of polymeric base, being of different nature from the solution presented.

The documents cited describe the incorporation of reflective pigments in a polymeric-based coating, being the colour effect obtained by the combination with a second layer with different optical properties (transparent to IR radiation).

These facts are described in order to illustrate the technical problem solved by the embodiments of the present document.

### General description

The ceramic coating plates for outdoor application, in particular with visual appearance similar to wood, have become very popular and, in some cases, it becomes difficult to tell them apart unless when temperature difference is felt upon touch.

The perception and sensation of thermal shock felt in the contact with ceramic materials are mainly due to the high thermal conductivity of this type of materials. This characteristic, allied to its high emissivity, is also a cause of discomfort in outdoor applications, because of the high temperature values reached by ceramic coatings.

Therefore, the present document describes a ceramic coating plate that presents a substantially improved sensation of thermal comfort on the surface, particularly through the incorporation of IR radiation reflective pigments in the superficial layer of an usual technical porcelain tile. To provide the desired tonality, colour pigments were used together with the reflective pigment, in order to obtain an improved reflection effect without compromising the colour of the final ceramic mass.

Another problem intended to be solved with the present invention was to develop a vitreous layer, with a high reflectivity index that does not change the appearance of the final plate.

An aspect described in the present disclosure is associated with a coating plate in ceramic material for outdoor application with vitreous layer wherein the vitreous layer comprises 3-30 % (m/m) titanium dioxide (TiO₂) as infrared (IR) radiation reflective pigment, preferably in rutile form - one of the three TiO₂ polymorphs.

In a preferred embodiment, better results are obtained for the plate described when TiO₂ is between 5-25 % (m/m).

In a preferred embodiment, better results are obtained for the plate described when TiO₂ is between 8-20 % (m/m).

In a preferred embodiment, better results are obtained when TiO₂ is of 9%, 10%, 11% or 12% (m/m).

In a preferred embodiment, better results are obtained when the infrared reflective pigment of the ceramic coating plate may further comprise other metallic oxides, such as Al₂O₃, SiO₂, MnO, SbO, Fe₂O₃, or mixtures thereof, preferably a combination of TiO₂, Al₂O₃, SiO₂ or TiO₂, MnO and SbO.

In a preferred embodiment, better results are obtained for the plate described when TiO₂ presents a particle size between 0.1-2 µm, preferably 0.2-1 µm, preferably between 0.41-0.9 µm. Controlling the TiO₂ particle size further allows minimizing the colour thereof, which may be relevant for some uses.

TiO₂ particles may have several forms: circular, oval, conical, tubular and their size may be calculated by different methods available in the state of the art. The titanium dioxide particle size may be measured by dispersion in distilled water using laser diffraction spectrometry (LDS) (BT-2003, Dandong, Ltd). The dispersing agent may be sodium hexametaphosphate. The refractive index of TiO₂ particles and the surrounding medium is 2.81 and 1.333, respectively. In the present disclosure the preferred method to determine the TiO₂ particle size is described in document - T. A. Egerton and I. R. Tooley, International Journal of Cosmetic Science, 2014, 1-12 - hereby incorporated as reference.

In a preferred embodiment, better results are obtained for the plate described when the plate further comprises at least 1 % (m/m) of a coloured inorganic pigment in the ceramic material.

In a preferred embodiment, better results are obtained for the plate described when the coloured inorganic pigment is 1-10 % (m/m), preferably 2-6 % (m/m), even more preferably 3-5 % (m/m).

In a preferred embodiment, better results are obtained for the plate described when one or more coloured inorganic pigments are selected from the following list of pigments comprising: iron, chromium, cobalt, nickel, manganese, zinc, magnesium or mixtures thereof.

In a preferred embodiment, better results are obtained for the plate described when the ceramic material is a conventional porcelain tile.

The ceramic coating plate for outdoor application comprising TiO₂ in the vitreous layer may be a tile, a ceramic, a mosaic, paving block or a slab, among others.

In one embodiment of the ceramic coating plate for outdoor application comprising TiO₂ in the vitreous layer, it may have an appearance similar to wood, or schist, or cobalt, among others, with an improved thermal performance, which allows application of these plates in outdoor environments, such as pavements and/or façades.

Another aspect of the present disclosure consists in describing a method for obtaining the ceramic coating plate for outdoor application comprising TiO₂ in the vitreous layer and use thereof, particularly in the construction field.

In one embodiment, the porcelain tile of the ceramic coating plate incorporating the TiO₂-based reflective pigment, may be produced through conventional processes in ceramic coating industry, the material having been fired at a maximum temperature of 1200 °C.

Assays have been performed for the assessment of the reflective effect of the ceramic coating plate incorporating the TiO₂-based reflective pigment, after exposure to solar radiation and/or infrared radiation and its thermal profile has been determined during the assays. For comparison purposes, a common technical porcelain tile and two wood samples for deck application have also been assessed, according to the same procedure. The results obtained allow concluding that the incorporation of a reflective pigment in the ceramic superficial layer significantly changes the behaviour of the porcelain tile in terms of infrared reflection, wherein superficial temperatures markedly lower than those of comparative materials were obtained, thus improving the performance when said plates are exposed to sunlight. Therefore, the ceramic coating plate incorporating the TiO₂-based reflective pigment presents an appearance similar to wood and improved thermal performance and maintains all properties of a ceramic.

The present disclosure describes a ceramic coating plate comprising TiO₂ in the vitreous layer which increases user comfort when using ceramic coatings applied in outdoor environments, thus lowering the maximum temperature achieved by this type of coatings on summer days. This objective has been solved through the incorporation of TiO₂ in the glass (or vitreous) layer existing in certain types of porcelain tile. To compensate the colour variation resulting from the incorporation of TiO₂ as IR reflective pigment, colour pigments have been added, wherein different tonalities, namely dark colours, have been obtained. Analysing the reflection effect on these tonalities is of great importance, since they are commonly associated to high absorptivity values and, consequently, to the high temperatures reached on summer days.

### Detailed description

In one embodiment, the ceramic coating plate comprising TiO₂ in the vitreous layer presents the desired effect by changing the ceramic material and not by applying additional layers, including layers for reflection effect and layers to promote colour. With the development performed, it is still possible to obtain the desired effect, while maintaining the conventional process of ceramic coating production as well as the technical properties of the material, which represents an added value for ceramic industry. Another aspect of valorisation of the development performed is the aesthetical versatility of the product, due to the possibility of having a variety of colours and styles, namely for imitation of wood pavements. For this specific case, the development performed allows obtaining a ceramic coating plate comprising TiO₂ in the vitreous layer with wooden appearance and improved performance in terms of infrared radiation reflection. In this way, the development performed allows combining the added values of two types of material into one: the technical properties of ceramics, such as weather and abrasion strength, the aspect and thermal comfort of wood and also the reduction of colour degradation.

In one embodiment, TiO₂ was added as infrared reflective pigment in a conventional porcelain tile. The choice of the porcelain tile was based on its appearance close to wood and its applicability in outdoor environments, where the need for reducing temperatures reached on hot days is crucial. Since being a more ambitious challenge, a dark colour porcelain tile was selected, however, the scientific-technological development hereby described may be adapted to several other products, with other styles and colours.

In one embodiment, the addition of the infrared reflective pigment in the porcelain tile's superficial layer, i.e., in the vitreous layer, the ceramic slab was produced from conventional raw materials, namely clays, feldspars, silicas, kaolins and additives, among others.

In a preferred embodiment for better results, the IR reflective pigment used consists of a pigment based on titanium dioxide (TiO₂) in its rutile form, with a particle size between 0.2-2 µm, with a d90 of 1 µm. The particle size of the TiO₂ pigment allows obtaining a high infrared reflectivity with a minimized reflectance in the visible, relatively to common TiO₂. In this way, this pigment has a low pigmentation power, being particularly adequate for situations when obtaining various colours is desired.

In a preferred embodiment for better results, colour pigments have also been used, already commonly used in ceramic coating industry for aesthetical effects, namely inorganic base pigments (Fe, Cr, Zn and Ni) with brown and black tonalities. It should be mentioned that the selection of these pigments took the desired final colour with dark brown tonality into consideration, as well as the high chromatic yield of the pigments and an excellent behaviour in all types of glass. For obtaining other tonalities, other colour pigments should be used, underlining that the development described is not limited to the colour pigments herein presented.

Preparation of samples was based on the conventional procedure for technical porcelain tile production, which encompasses three main stages: pressing, glazing/decoration and firing.

In the pressing stage, the compaction and conformation of the atomized powders may be performed for obtaining the ceramic mosaic. In the present disclosure this stage was performed in the conditions defined for conventional porcelain tile.

In one embodiment in the glazing/decoration stage, different types of applications may be carried out in order to obtain completely different drawings, effects and textures. In the ceramic coating plate, a process of digital printing has been carried out for obtaining the wood effect, followed by a glazing process, which provides to the ceramic coating with a superficial layer. In the solution described a composition of the glass (vitreous) solution has been developed, keeping the plate production process unchanged. The infrared reflective pigments previously mentioned, such as TiO₂, were incorporated in an aqueous glass solution previously prepared based on the materials and methods defined for the original technical porcelain tile. To 100 % (m/m) of the glass solution, 10 % (m/m) TiO₂ was added with a particle size distribution between 0.21-1 micrometre, and a d90 of 0.91 micrometre, 5% (m/m) Brown and 1% (m/m) Black. The reflective pigment - TiO₂ - may be incorporated in the glass solution in quantities between 3 and 20 % (m/m), preferably between 5 and 15 % (m/m), whereas, below the minimum threshold, the reflective effect becomes of minor significance and, above the maximum threshold, the desired colour, namely dark colours, may be compromised. The quantities of colour pigments should be adjusted depending on the quantity of reflective pigment incorporated and/or the intended tonality of the ceramic plate.

In one embodiment, the mixture obtained has been homogenized within a mechanical paddle stirrer and, subsequently, applied over the ceramic mosaic. This stage was performed in laboratorial environment, through spraying technique, with a coupled compressed air system, at a pressure of 2 bar. The grammage of applied glaze was about 130 g/m², according to the technical data of this type of stoneware. Other wet glazing techniques may be considered, particularly in industrial environments, from continuous application techniques (curtain, bell) to spraying techniques (gun, disc, cabin).

In one embodiment, the ceramic coating production process is concluded in the firing stage, which promotes the transformations needed for obtaining products with the desired technological and aesthetical characteristics. This sintering process is specific and adjusted to each product, so as to promote and guarantee the final characteristics. The firing of the ceramic mosaic comprising TiO₂ was performed in high temperature furnaces, according to an usual heating program for the original technical porcelain tile. The heating program used was the following: heating up to 1200 °C; four levels at 1200 °C; fast cooling to room temperature; total cycle time 60 minutes.

In one embodiment, after the porcelain tile comprising TiO₂ in the vitreous layer had been obtained, performance assessment assays were performed in terms of thermal behaviour upon exposure to solar radiation and infrared radiation. For comparison purposes, a common technical stoneware and two samples of wood for deck application were also assessed. The porcelain tile developed and described in the present disclosure presents an identical tonality to that of the product developed in the original porcelain tile. Regarding the wood samples, both of brown tonality, one of the samples having a light tone (designated Wood Deck 1) and the other having a darker tone (designated Wood Deck 2).

In the solar exposure assay, samples were exposed to this radiation (in an outdoor location) for 6 hours and their surface temperature was registered during the assay. The assessment was performed at maximum temperature reached in the assay for each sample.

In the infrared exposure assay, samples were placed under infrared lamps (Philips, 1100 W power), at a distance of 30 cm, for 30 minutes. After this period, the temperature reached on the surface of the samples was registered. Room temperature was 19 °C.

In both assays, surface temperature determination was performed using an infrared thermometer (Infrared Thermometer TES 1327K).

Throughout the description and claims the word "comprises" and variations of the word, do not intend to exclude other technical characteristics, additives, components, or steps. Additional objects, advantages and characteristics of the invention will become apparent to one skilled in the art upon examination of the description or may be learned through practice of the invention. The following examples are provided by way of illustration, and do not intend to be restrictive of the present invention. In addition, the present invention encompasses all possible combinations of particular or preferred embodiments herein described.

Followingly, the results obtained in the performance assessment assays are presented in terms of thermal behaviour under exposure to solar radiation and infrared radiation.

Table 1 presents the temperature values obtained in the assays performed for the technical porcelain tile with 10 % TiO₂-based pigment, for the original technical stoneware and for wood substrates.

### Example 1 - Porcelain tile without reflector

The preparation of the porcelain tile without reflector was based on the conventional procedure for the production of technical porcelain tile, which encompasses three main stages: pressing, glazing/decoration and firing.

In the pressing stage, compaction and conformation of atomized powders for obtaining the ceramic mosaic was performed, at a pressure of about 400 kgf/cm².

In the glazing/decoration stage, a digital printing process was performed for obtaining the wood effect, followed by a glazing process, which provides the ceramic coating with a superficial layer.

The firing of the porcelain tile without reflector was performed in high temperature furnaces, using the following heating program: heating up to 1200 °C; four levels at 1200 °C; fast cooling to room temperature; total cycle time 60 minutes.

### Example 2 - Porcelain tile with IR reflective pigment comprising TiO₂, Al₂O₃ and SiO₂

The preparation of the porcelain tile with IR reflective pigment comprising TiO₂, Al₂O₃ and SiO₂ was based on the procedure described in Example 1. The main change was done at the glass solution composition level, with no changes undertaken to the process. In this example, this stage is thus described in more detail.

The reflective pigment comprising TiO₂, Al₂O₃ and SiO₂ was incorporated in a conventional glass aqueous solution of the stoneware described in Example 1. To 100 % (m/m) of the glass solution, 10 % (m/m) TiO₂ was added with a particle size distribution between 0.21-1 micrometre, and a d90 of 0.91 micrometre, 5 % (m/m) of coloured pigment of brown tonality and 1% (m/m) of coloured pigment of black tonality. The mixture obtained was homogenized within a mechanical paddle stirrer and, subsequently, applied over the ceramic mosaic. This stage was performed in laboratorial environment, through spraying technique, with a coupled compressed air system, at a pressure of 2 bar. The grammage of applied glaze was about 130 g/m².

### Example 3 - Stoneware with IR reflective pigment comprising TiO₂, MnO and SbO

The preparation of the porcelain tile with IR reflective pigment comprising TiO₂, MnO and SbO was based on the procedures described in Examples 2 and 3. The main change was done at the glass solution composition level, wherein to 100 % (m/m) of the glass solution, 10 % (m/m) of the pigment comprising TiO₂, MnO and SbO was added.

### Example 4 - Performance assessment of the developed stoneware

The performance assessment was undertaken in terms of thermal behaviour under exposure to solar radiation and infrared radiation. For comparison purposes, two samples of wood for deck application were also assessed. These samples present brown tonalities, one of the samples having a light tone (designated Wood Deck 1) and the other having a darker tone (designated Wood Deck 2).

**Table 1: Temperatures obtained for materials assessed in the exposure to solar radiation and infrared radiation assays**

| | **Solar** | **Infrared** |
|---|---|---|
| **Sample** | **T max (°C)** | **T after 30 min (°C)** |
| **Porcelain tile without reflective pigment** | 55.2 | 48.6 |
| **Wood Deck 1** | 49.2 | 41.1 |
| **Wood Deck 2** | 51.4 | 41.1 |
| **Porcelain tile with 5% (m/m) IR reflective pigment with TiO₂, Al₂O₃ and SiO₂** | 50.2 | 35.6 |
| **Porcelain tile with 5% (m/m) IR reflective pigment with TiO₂, MnO and SbO** | - | 35.7 |

In the solar exposure assay, samples were exposed to such radiation (in an outdoor location) for 6 hours and their surface temperature was registered during the assay. The assessment was done at the maximum temperature reached in the assay for each sample. In the infrared exposure assay, the samples were placed under infrared lamps (Philips, 1100 W power), at a distance of 30 cm, for 30 minutes. After this period, the temperature reached on the surface of the samples was registered. Room temperature was at 19 °C. In both assays, the surface temperature determination was performed using an infrared thermometer (Infrared Thermometer TES 1327K). Table 1 shows the performance assessment results.

In Table 1, the performance assessment was done in terms of thermal behaviour under exposure to solar radiation and infrared radiation. For comparison purposes, two samples of wood for deck application were also assessed. These samples have brown tonalities, one of the samples having a light tone (designated Wood Deck 1) and the other having a darker tone (designated Wood Deck 2).

In the solar exposure assay, samples were exposed to such radiation (in an outdoor location) for 6 hours and their surface temperature was registered during the assay. The assessment was done at maximum temperature reached in the assay for each sample.

From the analysis, the first observation registered has to do with the fact that porcelain tile for outdoor application comprising TiO₂ in the vitreous layer presents a superior performance over conventional porcelain tile (porcelain tile without reflective pigment). This difference has higher significance in the infrared radiation exposure assay, where a temperature reduction of about 13 °C was achieved. In this assay, it has also been noticed that the porcelain tile developed and described in examples 2 and 3 is beyond the reference materials, namely Wood Deck 1 and Wood Deck 2. In a preferred embodiment, obtaining a ceramic coating with visual appearance of wood and with identical or superior performance to wood coatings for deck application was intended. The improvement of the stoneware described in example 2 over wood materials becomes less apparent in the solar exposure assay. Upon assessing the values obtained in the solar exposure assay, it has been verified that the ceramic coating plate for outdoor application comprising TiO₂ in the vitreous layer presents a temperature lower than that of sample Wood Deck 2, however, higher than that of Wood Deck 1. The difference observed in wood samples may be due to their tonalities, in that sample Wood Deck 1 presents a lighter colour relatively to Wood Deck 2 and, according to the exposed in the state of the art, lighter colours tend to have higher reflectivity. Upon a joint analysis of the two assays, it has been verified that the values of temperature reached are globally higher in the solar exposure assay. This observation may be due to the assay conditions being different, namely at room temperature level: in the solar radiation exposure assay, the temperature had a value of about 30 °C, while, in the IR radiation exposure assay, room temperature was at 19 °C. The registered difference in room temperature may be influencing the sample heating, since this process results from three phenomena of heat transfer: radiation, convection and conduction. In the infrared radiation exposure assay, heating is essentially by radiation, since the surrounding air and materials in contact with the samples are at a relatively low temperature (about 19 °C). In the case of solar radiation, besides the heating resulting from the radiation emitted by the sun, the high temperature of the surrounding air may be causing heating by convection.

Additionally, the materials in contact with the samples, also undergo heating, contributing to the temperature increase of the samples by conduction. Therefore, in the solar exposure assay, the main contribution for sample heating won't be only dependent on the phenomenon of heat transfer by radiation. These conjectures are particularly interesting for the analysis and comparison of the values obtained for the different samples: wood samples, although having less reflective power, as observed in the IR exposure assay, have a similar performance to the developed porcelain tile in the solar exposure assay, maybe due to presenting lower values of thermal conductivity than ceramics. In this way, the heating occurred in these samples by convection and conduction phenomena is less significant, leading to a lower temperature increase on the surface thereof.

In short, as a result of the analysis of the table values and assay conditions, it has been observed that the incorporation of the reflective pigments in the ceramic product allows improving their performance in terms of IR radiation reflection. Under solar exposure, this effect is less pronounced, however an improvement over the original technical porcelain tile is still observed.

In view of the results obtained, it is possible to conclude that the incorporation of TiO₂ in the ceramic vitreous layer significantly changes the coating behaviour. The ceramic coating plate comprising TiO₂ in the vitreous layer has a high performance in terms of infrared reflection, translating into a decrease of the maximum temperature reached under solar exposure. This feature allows the application of ceramic coatings in outdoor pavements, thus providing the user with thermal comfort in the contact between the plantar surface of the feet and the ceramic material. Another advantage of ceramic coating plate with this feature is the possibility of application in façades, due to the fact that the temperature reached by ceramic materials is within the range considered by producers of glues for façades, thus guaranteeing the performance thereof.

Embodiments described above are combinable with each other.

The present invention is of course in no way restricted to the embodiments herein described and a person of ordinary skill in the art will be able to provide many modification possibilities thereto and substitutions of technical features for equivalents, according to requirements in each situation, as defined in the claims.

The following claims further define preferred embodiments.

## Claims

1. Ceramic coating plate for outdoor application comprising a vitreous layer wherein the vitreous layer comprises 3-30 % (m/m) of an infrared reflective pigment, wherein the infrared reflective pigment comprises titanium dioxide - TiO₂.

2. Plate according to the previous claim wherein TiO₂ concentration is between 5-25 % (m/m).

3. Plate according to any of the previous claims wherein TiO₂ concentration is between 8-20 % (m/m).

4. Plate according to any of the previous claims wherein TiO₂ concentration is between 9-11% (m/m).

5. Plate according to any of the previous claims comprising TiO₂ particles with a size ranging between 0.1-2 µm.

6. Plate according to the previous claim comprising TiO₂ particles with a size ranging between 0.25-2 µm.

7. Plate according to any of the previous claims wherein the infrared reflective pigment further comprises metallic oxides Al₂O₃, SiO₂, MnO, SbO, Fe₂O₃, or mixtures thereof.

8. Plate according to the previous claim wherein the reflective pigment is a combination of TiO₂, Al₂O₃, SiO₂ or TiO₂, MnO and SbO.

9. Plate according to any of the previous claims comprising infrared reflective pigment particles with a size ranging between 0.1-2 µm.

10. Plate according to the previous claim comprising infrared reflective pigment particles with a size ranging between 0.25-1 µm.

11. Plate according to any of the previous claims further comprising at least 1 % (m/m) of a coloured inorganic pigment.

12. Plate according to the previous claim wherein the coloured inorganic pigment concentration is between 1-10 % (m/m).

13. Plate according to the previous claim wherein the coloured inorganic pigment concentration is between 2-6 % (m/m).

14. Plate according to any claim 11-13 wherein one or more coloured inorganic pigments are selected from the following list of pigments: iron, chromium, nickel, manganese, zinc, or mixtures thereof.

15. Plate according to any of the previous claims wherein TiO₂ is in rutile form.

16. Plate according to any of the previous claims wherein the ceramic material is a porcelain tile.

17. Plate according to any of the previous claims wherein the plate is tile, a ceramic, a mosaic, a paving block or a slab.
